# FASCICULE DE BREVET EUROPEEN

(11) **EP 1 649 740 B1**
(45) Date de publication et mention de la délivrance du brevet: **15.08.2012**
(21) Numéro de dépôt: 05358011.4
(22) Date de dépôt: 13.10.2005
(51) Int. Cl.: A01D 46/253, A01D 46/26

(54) **Doigts de secouage de peignes mobiles d'appareils de récolte aérienne de petits fruits, et appareils de récolte faisant application de tels doigts**
Schüttlerfinger für bewegliche Kämme von Kleinfrüchtenerntevorrichtungen, und Vorrichtungen mit solchen Fingern
Shaking fingers of movable combs of harvesting apparatus for small fruits and harvesting apparatus which employ such fingers

(30) Priorité: 22.10.2004 FR 0411268
(43) Date de publication de la demande: 26.04.2006
(73) Titulaire: PELLENC (Société Anonyme), 84120 Pertuis (FR)
(72) Inventeur: Pellenc, Roger, 84120 Pertuis (FR)
(74) Mandataire: Marek, Pierre

(56) Documents cités:
- US-A- 3 237 389
- US-A- 3 347 587
- US-A- 3 522 697
- US-A- 3 574 386
- US-A- 4 202 158
- US-A- 5 437 146

## Description

La présente invention concerne un doigt de secouage de peignes mobiles d'appareils de récolte de petits fruits tels que, par exemple, olives, amandes, cerises du caféier, mirabelles et autres. Elle vise aussi les peignes mobiles et les appareils de récolte, particulièrement les appareils de récolte portables, munis de tels doigts de secouage.

Un appareil de ce genre est, par exemple, décrit dans le document EP-1.116.432. Il comprend une perche pourvue d'une poignée de commande et dont l'extrémité distale est munie d'une tête de récolte comprenant une pluralité de doigts mobiles destinés à être introduits dans la frondaison des arbres fruitiers à récolter, et une motorisation permettant de mouvoir l'ensemble des doigts, de façon à secouer la ramure desdits arbres et à provoquer le détachement des fruits. La tête de récolte de cet appareil comprend un peigne mobile constitué d'un support de doigts et d'une pluralité de doigts implantés individuellement et de façon amovible sur ledit support de doigts. Chaque doigt est généralement constitué par une tige rigide fixée, par l'intermédiaire de l'une de ses extrémités, sur le support de doigts.

Le peigne mobile ainsi constitué est monté avec une aptitude de mouvement de va-et-vient et il est accouplé à des moyens d'entraînement permettant de lui communiquer ce mouvement. Celui-ci requiert une importante consommation d'énergie.

Les appareils du genre décrits dans le document EP-1.116.432 sont très maniables et ils peuvent être utilisés efficacement pour la récolte manuelle assistée d'une grande variété de petits fruits. Toutefois, un pourcentage important de fruits récoltés se trouvent meurtris par suite de leur entrée en contact avec les doigts du peigne de sorte qu'en raison de cette forte proportion de fruits tavelés, la récolte obtenue à l'aide de ces appareils n'est pas acceptable pour la consommation de table. C'est par exemple le cas pour les olives vertes de table servies en hors-d'oeuvre ou à l'apéritif.

On a proposé de palier cet inconvénient (US-5.099.637) en dotant les doigts du peigne de secouage d'un enrobage de matière élastique molle constitué par une gaine de caoutchouc naturel. Cependant, la diminution du pourcentage d'olive tavelées dans la récolte d'olives vertes effectuée à l'aide du matériel décrit dans le document susmentionné, reste insuffisante pour que l'on puisse utiliser cette récolte pour la production d'olives de table.

Les recherches et essais préalables à la mise au point de l'invention, ont permis de constater que ce résultat médiocre est dû à une densité trop importante et à un poids trop important du matériau d'enrobage. L'enrobage des doigts de secouage au moyen d'une gaine de matière élastique compacte formant une masse très dense alourdit sensiblement lesdits doigts, de sorte que l'entraînement du peigne de secouage requiert une quantité plus grande d'énergie et une accélération plus importante des doigts lors de leur mouvement alternatif. Dans le cas de l'appareil de récolte décrit dans le document US-5.099.637, l'enrobage des doigts de secouage au moyen d'un fourreau de caoutchouc naturel procure un amortissement nettement insuffisant des chocs résultant de l'entrée en contact d'un certain pourcentage d'olives avec lesdits doigts lors du fonctionnement du peigne de récolte dans la frondaison des oliviers.

Un objet de l'invention est de mettre à la disposition des utilisateurs d'appareils de récolte aérienne de petits fruits et, plus particulièrement, des olives vertes, un matériel permettant, sinon de supprimer totalement, du moins de réduire considérablement le pourcentage de fruits présentant des tavelures ou tâches, de sorte à rendre possible l'utilisation de ce matériel pour la récolte d'olives vertes destinées à la consommation de table et cela sans nuire au confort d'utilisation de ce matériel et sans requérir une quantité trop grande d'énergie supplémentaire pour mouvoir la partie active dudit matériel.

Selon l'invention, ce résultat est obtenu au moyen d'un doigt de secouage tel que revendiqué dans la revendication 1.

Selon un premier mode d'exécution avantageux, les vides longitudinaux sont séparés par des cloisons souples présentant une section en forme de spirale et raccordant la partie centrale tubulaire de l'enveloppe à la partie externe tubulaire de cette dernière.

Selon un autre mode de réalisation, les vides longitudinaux sont séparés par des cloisons radiales souples raccordant la partie centrale tubulaire de l'enveloppe à la partie tubulaire externe de cette dernière.

Selon un autre mode d'exécution, les cavités longitudinales sont constituées par une pluralité de nervures longitudinales tubulaires et de sillons ou rainures longitudinales, disposées en alternance autour de la partie centrale de l'enveloppe.

Selon un autre mode d'exécution, les cavités longitudinales sont constituées par une pluralité de sillons ou rainures longitudinales séparées par des ailettes radiales souples disposées à la périphérie de l'enveloppe de matière élastique, autour de la partie centrale de cette dernière.

L'agencement des doigts de secouage conformément à l'invention permet une meilleure répartition de la pression des doigts sur les fruits, ainsi qu'un meilleur amortissement des chocs lorsqu'ils entrent en contact avec des olives, en cours de récolte, et de réduire ainsi notablement le pourcentage des fruits présentant des tavelures, de sorte que ces derniers peuvent être extraits de la récolte, par un tri qui peut s'opérer rapidement dans des conditions économiques acceptables pour les exploitants. En outre, dans les modes d'exécution où de l'air se trouve emprisonné dans les cavités de l'enveloppe de matière élastique, cet air renfermé dans lesdites cavités participe à l'amortissement des chocs.

Les buts, caractéristiques et avantages ci-dessus, et d'autres encore, ressortiront mieux de la description qui suit et des dessins annexés dans lesquels :
La figure 1 est une vue en élévation avec coupe partielle, d'un premier exemple de réalisation d'un doigt de secouage selon l'invention.
La figure 2 est une vue en coupe selon la ligne 2-2 de la figure 1.
La figure 3 est une vue en élévation, avec coupe partielle, d'un deuxième mode d'exécution de l'invention.
La figure 4 est une vue en coupe selon la ligne 4-4 de la figure 3.
La figure 5 est une vue en élévation, et avec coupe partielle, d'une troisième forme de réalisation de l'invention.
La figure 6 est une vue en coupe selon la ligne 6-6 de la figure 5.
La figure 7 est une vue en élévation, et avec coupe partielle, d'un quatrième mode d'exécution de l'invention.
La figure 8 est une vue en coupe suivant la ligne 8-8 de la figure 7.
La figure 9 est une vue en élévation illustrant un doigt de secouage dont l'extrémité distale est façonnée selon un premier exemple de réalisation de ladite extrémité.
La figure 10 est une vue en coupe axiale selon la ligne 10-10 de la figure 9.
La figure 11 est une vue semblable à la figure 9 et montrant un autre exemple de conformation de l'extrémité distale du doigt de secouage selon l'invention.
La figure 12 est une vue en coupe selon la ligne 12-12 de la figure 11.

On se reporte auxdits dessins pour décrire des exemples de réalisation intéressants, bien que nullement limitatifs, des doigts de secouage selon l'invention.

Dans l'exposé qui suit, le terme "enveloppe" doit être considéré comme l'équivalent des mots "enrobage" ou "revêtement" susceptible d'être rapporté sur une tige, par exemple par un procédé de surmoulage, ou des mots "gaines" ou "fourreau" susceptible d'être rapporté de manière amovible sur une tige par enfoncement de celle-ci dans le trou axial traversant l'enveloppe.

D'autre part, l'expression "partie active" désigne la partie des doigts de secouage appelée à se trouver au contact des branches des arbres, en cours de récolte, et dont le mouvement oscillant provoque le détachement des fruits.

Les doigts de secouage selon l'invention sont du genre constitué par une tige rigide 1, pleine ou tubulaire, de section cylindrique ou autre, cette tige pouvant être avantageusement exécutée en matériau composite à base de fibres de verre, ou à base de fibres de carbone, ou de fibres aramides ou autres, par exemple par un procédé de pultrusion. Ils présentent, par exemple, une longueur de l'ordre de 300 à 370 mm et un diamètre de l'ordre de 4,50 mm.

L'extrémité proximale de ces doigts est préférentiellement munie d'un moyen (non représenté) permettant de les fixer, de manière individuelle et amovible, sur un support de doigts, par exemple constitué par un tube cylindrique pourvus de perçages diamétraux, de sorte à constituer un peigne mobile animé d'un mouvement d'oscillation par une motorisation. Un appareil de ce genre est décrit dans le document EP-1.116.432.

De manière connue en soi, la partie active 1a de la tige rigide 1 se terminant par l'extrémité distale de cette dernière est munie d'un enrobage ou enveloppe 2 de matière élastique, et selon une disposition caractéristique de l'invention, cette enveloppe 2 de matière élastique comporte, sur au moins la majeure partie et, de préférence, sur la totalité de sa longueur, une pluralité de cavités ou vides longitudinaux 3 ménagés dans l'épaisseur de ladite enveloppe, autour de la partie centrale de cette dernière, entre ladite partie centrale et la périphérie de l'enveloppe.

L'enveloppe ou enrobage 2 est, de préférence, exécutée en un élastomère, par exemple en mousse de polyuréthanne ou de "Néoprène" (Marque déposée).

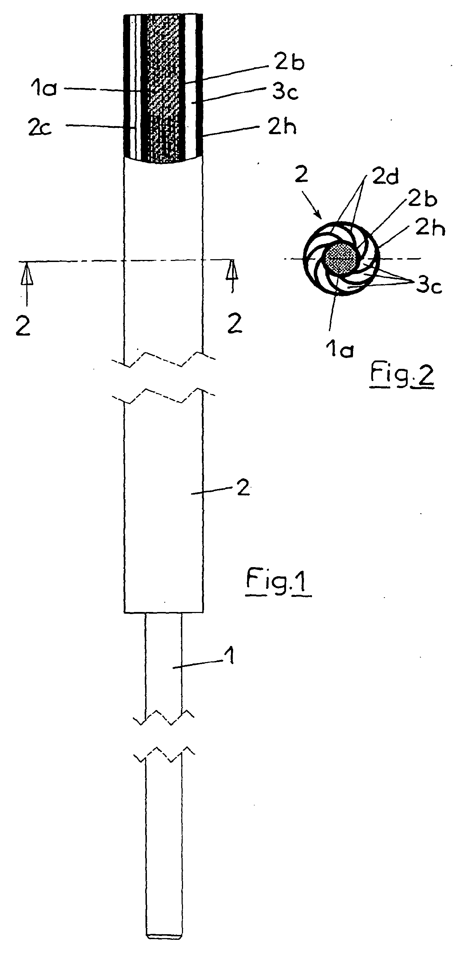

Selon un premier mode d'exécution intéressant illustré aux figures 1 et 2, les cavités sont constituées par une pluralité de vides longitudinaux 3c ménagés dans l'épaisseur de l'enveloppe de matière élastique 2, autour de la partie centrale tubulaire 2b de ladite enveloppe, et s'étendant, de préférence, d'une extrémité à l'autre de cette dernière, ces vides longitudinaux étant séparés par des cloisons souples 2d présentant une section en forme de spirale et raccordant ladite partie centrale 2b de l'enveloppe 2 à la partie tubulaire externe 2h de cette dernière.

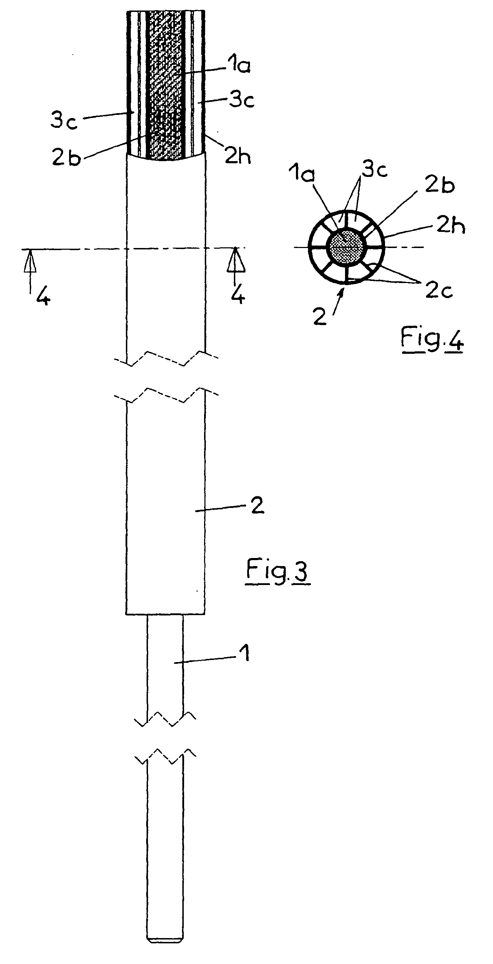

Selon un autre mode d'exécution montré aux figures 3 et 4, les cavités longitudinales sont constituées par une pluralité de vides longitudinaux 3c ménagés dans l'épaisseur de l'enveloppe 2 de matière élastique, autour de la partie centrale tubulaire 2b de ladite enveloppe et s'étendant, de préférence, d'une extrémité à l'autre de cette dernière. Selon ce mode d'exécution, les vides longitudinaux sont séparés par des cloisons radiales souples 2c raccordant la partie centrale de l'enveloppe 2 à la partie tubulaire externe 2h de cette dernière.

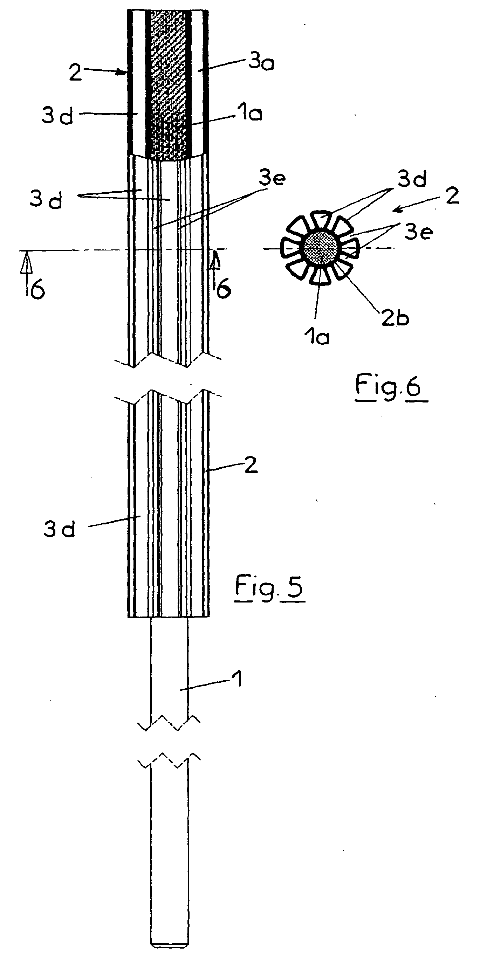

Suivant un autre mode de réalisation représenté aux figures 5 et 6, les cavités longitudinales sont constituées par une pluralité de nervures longitudinales tubulaires 3d et de sillons ou rainures longitudinale 3e, disposées en alternance autour de la partie centrale 2b de l'enveloppe 2 et s'étendant, de préférence, d'une extrémité à l'autre de ladite enveloppe.

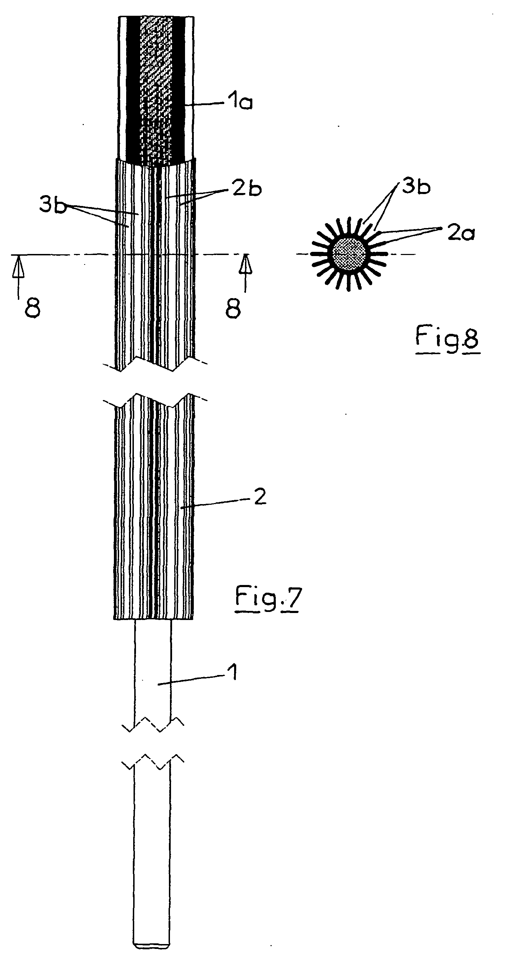

Selon le mode d'exécution représenté aux figures 7 et 8, les cavités longitudinales sont constituées par une pluralité de sillons ou rainures longitudinales 3b séparées par des ailettes souples 2a et régulièrement réparties à la périphérie de l'enveloppe de matière élastique 2, autour de la partie centrale 2b de cette dernière. Ces sillons ou rainures 3b s'étendent, de préférence, d'une extrémité à l'autre de l'enveloppe 2.

Suivant les modes d'exécution représentés aux figures 1 à 8, l'enveloppe de matière élastique 2 comporte une partie centrale 2b constituée par une gaine ou fourreau permettant d'enfiler ladite enveloppe sur la tige 1, ladite enveloppe se trouvant retenue par effet élastique et/ou par collage de cette partie centrale, sur ladite tige.

L'enveloppe 2 présente, par exemple, un diamètre extérieur de l'ordre de 10 mm.

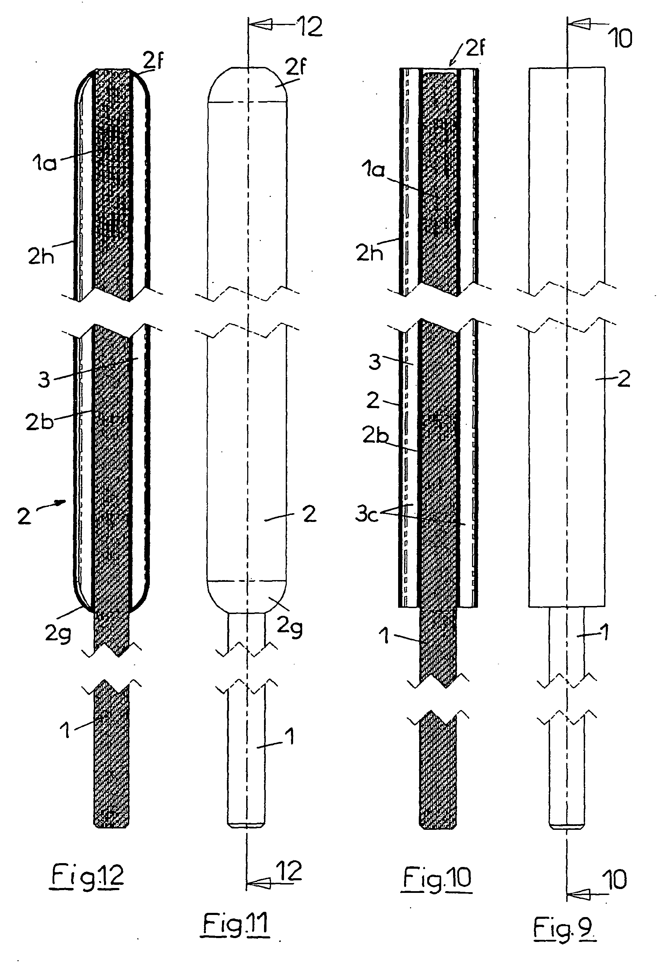

L'extrémité libre ou extrémité distale 2f de l'enveloppe 2 peut être laissée ouverte (figures 9 et 10) ou avantageusement fermée, par exemple par thermoformage (figures 11 et 12).

L'extrémité proximale 2g de l'enveloppe 2 peut être également laissée ouverte (figures 9 et 10), ou avantageusement obturée, par exemple par thermoformage (figures 11 et 12).

L'oblitération de l'extrémité libre de l'enveloppe tubulaire 2 facilite la pénétration du peigne mobile dans la végétation et renforce l'extrémité de la partie travaillante des doigts de secouage.

L'occlusion des extrémités distale 2f et proximale 2g de l'enveloppe 2 permet de créer une cavité fermée qui participe à l'amortissement des chocs, par compression de l'air emprisonné.

La forme de l'obturation de l'extrémité distale 2f et/ou de l'extrémité proximale 2g de l'enveloppe 2 est avantageusement conique ou sphérique.

## Revendications

1. Doigt de secouage pour peigne mobile d'appareils de récolte aérienne de petits fruits, comprenant une tige rigide (1) dont la partie active (1a) est munie d'une enveloppe de matière élastique (2), **caractérisé en ce que** cette enveloppe de matière élastique (2) est pourvue d'une pluralité de cavités ou vides longitudinaux (3b, 3c, 3d, 3e), ménagés dans l'épaisseur de ladite enveloppe autour de la partie centrale (2b) de cette dernière, entre ladite partie centrale (2b) et la périphérie de l'enveloppe et s'étendant sur au moins la majeure partie et, de préférence, sur la totalité de la longueur de ladite enveloppe.

2. Doigt de secouage suivant la revendication 1, **caractérisé en ce que** les vides longitudinaux (3c) sont séparés par des cloisons souples (2d) présentant une section en forme de spirale et raccordant la partie tubulaire centrale (2b) de l'enveloppe (2) à la partie tubulaire externe (2h) de cette dernière.

3. Doigt de secouage selon la revendication 1, **caractérisé en ce que** les vides longitudinaux (3c) sont séparés par des cloisons radiales souples (2c), raccordant la partie tubulaire centrale (2b) de l'enveloppe (2) à la partie tubulaire externe (2h) de cette dernière.

4. Doigt de secouage selon la revendication 1, **caractérisé en ce que** les cavités ou vides longitudinaux sont constitués par une pluralité de nervures longitudinales tubulaires (3d) et de sillons ou rainures longitudinales (3e), disposées en alternance, autour de la partie tubulaire centrale (2b) de l'enveloppe de matière élastique (2).

5. Doigt de secouage suivant la revendication 1, **caractérisé en ce que** les cavités sont constituées par une pluralité de sillons ou rainures longitudinales (3b) séparées par des ailettes souples (2a) disposées à la périphérie de l'enveloppe de matière élastique (2) autour de la partie tubulaire centrale (2b) de cette dernière.

6. Doigt de secouage selon l'une quelconque des revendications 1 à 5, **caractérisé en ce que** les tiges rigides (1) présentent un diamètre de l'ordre de 4,5 mm, tandis que l'enveloppe souple (2) a un diamètre extérieur de l'ordre de 10 mm.

7. Doigt se secouage suivant l'une quelconque des revendications 1 à 6, **caractérisé en ce que** l'enveloppe de matière élastique (2) est exécutée en élastomère thermoplastique, de préférence en "Néoprène" (Marque déposée).

8. Doigt de secouage selon l'une quelconque des revendications 1 à 7, **caractérisé en ce que** l'une au moins des extrémités (2f ou 2g) de l'enveloppe (2) est obturée.

9. Doigt de secouage suivant la revendication 8, **caractérisé en ce que** les deux extrémités (2f, 2g) de l'enveloppe (2) sont obturées.

10. Doigt de secouage, selon l'une des revendications 8 ou 9, **caractérisé en ce que** la forme de l'obturation de l'extrémité distale (2f) et/ou de l'extrémité proximale (2g) de l'enveloppe est conique ou sphérique.

11. Doigt de secouage selon l'une quelconque des revendications 8 à 10, **caractérisé en ce que** l'obturation de l'extrémité distale (2f) et/ou de l'extrémité proximale (2g) est réalisée par thermoformage de l'enveloppe (2) en matière élastique.

12. Appareil portable de récolte aérienne de petits fruits, comportant un peigne de secouage constitué d'un support de doigts et d'une pluralité de doigts montés de manière amovible sur ledit support de doigts, **caractérisé en ce que** lesdits doigts de secouage (1-2) sont réalisés selon l'une quelconque des revendications 1 à 11.

## Claims

1. A shaker finger for a movable comb of apparatuses for aerial harvesting of small fruits comprising a rigid rod (1) whose active portion (1a) is provided with a cover (2) of elastic material, **characterised in that** said cover (2) of elastic material is provided with a plurality of longitudinal spaces or cavities (3b, 3c, 3d, 3e) provided in the thickness of said cover around the central portion (2b) of the latter, between said central portion (2b) and the periphery of the cover and extending over at least the major part and preferably over the whole of the length of said cover.

2. A shaker finger according to claim 1 **characterised in that** the longitudinal spaces (3c) are separated by flexible partitions (2d) of a spiral-shaped section and connecting the central tubular portion (2b) of the cover (2) to the external tubular portion (2h) of the cover.

3. A shaker finger according to claim 1 **characterised in that** the longitudinal spaces (3c) are separated by flexible radial partitions (2c) connecting the central tubular portion (2b) of the cover (2) to the external tubular portion (2h) of the cover.

4. A shaker finger according to claim 1 **characterised in that** the longitudinal spaces or cavities are formed by a plurality of longitudinal tubular ribs (3d) and longitudinal grooves or channels (3e) disposed alternately around the central tubular portion (2b) of the cover (2) of elastic material.

5. A shaker finger according to claim 1 **characterised in that** the cavities are formed by a plurality of longitudinal grooves or channels (3b) separated by flexible wings (2a) disposed at the periphery of the cover (2) of elastic material around the central tubular portion (2b) of the latter.

6. A shaker finger according to any one of claims 1 to 5 **characterised in that** the rigid rods (1) are of a diameter of the order of 4.5 mm while the flexible cover (2) has an outside diameter of the order of 10 mm.

7. A shaker finger according to any one of claims 1 to 6 **characterised in that** the cover (2) of elastic material is made of thermoplastic elastomer, preferably 'Neoprene' (registered trade mark).

8. A shaker finger according to any one of claims 1 to 7 **characterised in that** one at least of the ends (2f or 2g) of the cover (2) is closed.

9. A shaker finger according to claim 8 **characterised in that** the two ends (2f, 2g) of the cover (2) are closed.

10. A shaker finger according to one of claims 8 and 9 **characterised in that** the shape of the closure of the distal end (2f) and/or the proximal end (2g) of the cover is conical or spherical.

11. A shaker finger according to any one of claims 8 to 10 **characterised in that** the closure of the distal end (2f) and/or the proximal end (2g) is implemented by thermoforming of the cover (2) of elastic material.

12. A portable apparatus for aerial harvesting of small fruits comprising a shaker comb formed by a fingers support and a plurality of fingers removably mounted to said fingers support, **characterised in that** said shaker fingers (1-2) are according to any one of claims 1 to 11.

## Patentansprüche

1. Schüttlerfinger für einen beweglichen Kamm von Kleinfrüchteerntevorrichtungen, umfassend einen starren Stab (1), dessen aktiver Teil (1a) mit einer Hülle aus elastischem Material (2) ausgestattet ist, **dadurch gekennzeichnet, dass** diese Hülle aus elastischem Material (2) mit einer Vielzahl von Hohlräumen oder länglichen Hohlstellen (3b, 3c, 3d, 3e) versehen ist, die in der Dicke der Hülle um den Mittelteil (2b) der Letzteren zwischen dem Mittelteil (2b) und dem Umfang der Hülle ausgespart sind und sich mindestens über den größten Teil und bevorzugt über die Gesamtheit der Länge der Hülle erstrecken.

2. Schüttlerfinger nach Anspruch 1, **dadurch gekennzeichnet, dass** die länglichen Hohlräume (3c) durch flexible Trennwände (2d) getrennt sind, die einen spiralförmigen Querschnitt aufweisen und den rohrförmigen Mittelteil (2b) der Hülle (2) mit dem äußeren rohrförmigen Teil (2h) dieser Letzteren verbinden.

3. Schüttlerfinger nach Anspruch 1, **dadurch gekennzeichnet, dass** die länglichen Hohlräume (3c) durch radiale flexible Trennwände (2c) getrennt sind, die den rohrförmigen Mittelteil (2b) der Hülle (2) mit dem äußeren rohrförmigen Teil (2h) dieser Letzteren verbinden.

4. Schüttlerfinger nach Anspruch 1, **dadurch gekennzeichnet, dass** die Hohlräume oder länglichen Hohlstellen aus einer Vielzahl von länglichen rohrförmigen Rippen (3d) und von länglichen Furchen oder Einkerbungen (3e) gebildet werden, die abwechselnd um den rohrförmigen Mittelteil (2b) der Hülle aus elastischem Material (2) angeordnet sind.

5. Schüttlerfinger nach Anspruch 1, **dadurch gekennzeichnet, dass** die Hohlräume von einer Vielzahl von länglichen Furchen oder Einkerbungen (3b) gebildet werden, die durch elastische Flügel (2a) getrennt sind, die am Umfang der Hülle aus elastischem Material (2) um den Mittelteil (2b) dieser Letzteren angeordnet sind.

6. Schüttlerfinger nach einem der Ansprüche 1 bis 5, **dadurch gekennzeichnet, dass** die starren Stäbe (1) einen Durchmesser in der Größenordnung von 4,5 mm aufweisen, während die flexible Hülle (2) einen Außendurchmesser in der Größenordnung von 10 mm aufweist.

7. Schüttlerfinger nach einem der Ansprüche 1 bis 6, **dadurch gekennzeichnet, dass** die Hülle aus elastischem Material (2) aus thermoplastischem Elastomer, bevorzugt aus "Neopren" (eingetragene Marke) ausgeführt ist.

8. Schüttlerfinger nach einem der Ansprüche 1 bis 7, **dadurch gekennzeichnet, dass** mindestens eines der Enden (2f oder 2g) der Hülle (2) verschlossen ist.

9. Schüttlerfinger nach Anspruch 8, **dadurch gekennzeichnet, dass** die beiden Enden (2f, 2g) der Hülle (2) verschlossen sind.

10. Schüttlerfinger nach einem der Ansprüche 8 oder 9, **dadurch gekennzeichnet, dass** die Form des Verschlusses des distalen Endes (2f) und/oder des proximalen Endes (2g) der Hülle konisch oder kugelförmig ist.

11. Schüttlerfinger nach einem der Ansprüche 8 bis 10, **dadurch gekennzeichnet, dass** der Verschluss des distalen Endes (2f) und/oder des proximalen Endes (2g) durch Thermoformung der Hülle (2) aus elastischem Material ausgeführt wird.

12. Tragbare Kleinfrüchteerntevorrichtung, umfassend einen Schüttlerkamm, der aus einer Fingerhalterung und einer Vielzahl von Fingern gebildet wird, die abnehmbar auf der Fingerhalterung montiert sind, **dadurch gekennzeichnet, dass** die Schüttlerfinger (1 - 2) nach einem der Ansprüche 1 bis 11 ausgeführt sind.
